# EUROPEAN PATENT APPLICATION

(11) **EP 4 691 833 A1**
(43) Date of publication of application: **11.02.2026**
(21) Application number: 23930645.9
(22) Date of filing: 31.03.2023
(51) Int. Cl.: B60L 50/60

(54) **ELECTRIC VEHICLE DRIVE DEVICE**

(71) Applicant: Mitsubishi Electric Mobility Corporation, Tokyo 100-8310 (JP)
(72) Inventor: NAKAMURA, Masashi, Tokyo 100-8310 (JP); SAKAI, Koji, Tokyo 100-8310 (JP); FUJITA, Masahiko, Tokyo 100-8310 (JP); HIGASHINO, Hiroyuki, Tokyo 100-8310 (JP)
(74) Representative: Plasseraud IP
(86) International application number: PCT/JP2023/013558
(87) International publication number: WO 2024/202010

(57) **Abstract**

An electric vehicle drive device (1) includes: a motor body portion (5); a motor housing (6) to which a stator (5c) is fixed on an inner side and which opens on one side in an axial direction; a motor bracket (7) which covers the one side in the axial direction of the stator (5c) and a rotor (5b) and has a center through hole (7a) through which a one-side shaft part (5a1) extending toward the one side in the axial direction from the rotor (5b) penetrates; and a speed reducer (4) which outputs rotation with a speed reduced from a rotational speed of a shaft (5a). The motor bracket (7) has one or more outer through holes (7b) penetrating in the axial direction, on a radially outer side of the center through hole (7a). The motor housing (6) or the motor bracket (7) has a tubular surrounding portion (13) which surrounds, over an entire circumference, a radially outer side of openings on the one side in the axial direction of all the outer through holes (7b). An end surface on the one side in the axial direction of the surrounding portion (13) contacts, over an entire circumference, with a case member (4a) of the speed reducer (4) via a seal member (14) so as to be sealed.

## Description

### TECHNICAL FIELD

The present disclosure relates to an electric vehicle drive device.

### BACKGROUND ART

In recent years, considering environmental problems such as global warming, change from a conventional vehicle using an internal combustion engine as a motive force to an electrified vehicle using an electric motor which does not emit carbon dioxide during driving as a motive force has been progressing rapidly. An electric vehicle drive device for driving an electric vehicle includes an electric motor, a speed-reduction mechanism which transmits rotation with a speed reduced from the speed of the electric motor to a vehicle shaft, and an inverter which converts DC power stored in a battery to desired AC power to perform drive control for the electric motor efficiently. Conventionally, the electric motor, the speed-reduction mechanism, and the inverter have been individually manufactured and then connected to each other. Meanwhile, a configuration in which these components are integrated for further size reduction is proposed (for example, Patent Document 1).

Patent Document 1 discloses a configuration in which a motor and a speed reducer are integrated. In this configuration, a housing on the motor side is provided with one plate-shaped part at an end surface on a side contacting with the speed reducer. On the other hand, on the speed reducer side, one plate-shaped part is provided at a part facing the end surface on the motor side. Therefore, when the motor and the speed reducer are combined with each other, the abutting surfaces form a double case. Thus, if a single motor and a single speed reducer for which sealing against the outside is completed are individually manufactured and then the motor and the speed reducer that have each undergone inspection are combined with each other, a double case structure as described above is formed. Although sealing against the outside is ensured, there is a problem that the electric vehicle drive device cannot be reduced in size, cost, and weight because of the double case structure.

A configuration of an electric vehicle drive device not having a double case is disclosed (for example, Patent Document 2). Patent Document 2 discloses such a configuration that, in a case storing a motor which is generally needed, an end surface part on a speed reducer side is shared with a surface of a case of the speed reducer. As compared to a method in which a motor and a speed reducer are individually manufactured and then combined with each other, the above configuration can avoid forming a double structure of abutting surfaces. It is considered that such a configuration that a double structure of abutting surfaces is not formed contributes to size reduction, cost reduction, and weight reduction of the electric vehicle drive device.

### CITATION LIST

### PATENT DOCUMENT

Patent Document 1: Japanese Laid-Open Patent Publication No. 2020-150608
Patent Document 2: Japanese Patent No. 5900012

### SUMMARY OF THE INVENTION

### PROBLEM TO BE SOLVED BY THE INVENTION

In Patent Document 2, it is possible to avoid forming a double structure of abutting surfaces. However, a motor can undergo function inspection only after assembly including bearings at both ends of a rotor is completed. If the above configuration is adopted, the motor can exert its function only after an assembly process is advanced to a step of combining the speed reducer and the motor with each other. Therefore, inspection for the motor as a single body cannot be performed and performance can be acquired only in a system combined with the speed reducer. Thus, it is difficult to recognize variation in the motor as a single body and variation in the speed reducer as a single body, so that there is a problem that reliability of the electric vehicle drive device is not sufficiently ensured.

In assembly work for a motor, axial alignment is performed accurately so that a rotor and a stator with a slight gap therebetween do not contact with each other, and precise attachment is performed using a jig or the like for assembling. In Patent Document 2, since one of the rotor bearings is provided to the speed reducer case, in an attachment step, an attachment target is a large-sized unit including the speed reducer. Therefore, it is difficult to perform precise attachment work, so that there is a problem that productivity for the electric vehicle drive device is lowered.

Accordingly, an object of the present disclosure is to provide an electric vehicle drive device which is reduced in size, cost, and weight and of which reliability is ensured and productivity is improved.

### MEANS TO SOLVE THE PROBLEM

An electric vehicle drive device according to the present disclosure includes: a motor body portion including a shaft, a rotor which rotates integrally with the shaft, and a stator surrounding the rotor from a radially outer side; a motor housing to which the stator is fixed on an inner side and which opens on one side in an axial direction; a motor bracket which covers the one side in the axial direction of the stator and the rotor and has a center through hole through which a one-side shaft part extending toward the one side in the axial direction from the rotor penetrates; and a speed reducer which is connected to the one-side shaft part and outputs rotation with a speed reduced from a rotational speed of the shaft. The motor bracket has one or more outer through holes penetrating in the axial direction, on a radially outer side of the center through hole. The motor housing or the motor bracket has a tubular surrounding portion which surrounds, over an entire circumference, a radially outer side of openings on the one side in the axial direction of all the outer through holes. An end surface on the one side in the axial direction of the surrounding portion contacts, over an entire circumference, with a case member of the speed reducer via a seal member so as to be sealed.

### EFFECT OF THE INVENTION

The electric vehicle drive device according to the present disclosure includes: the motor body portion including the shaft, the rotor, and the stator; the motor housing to which the stator is fixed on the inner side and which opens on the one side in an axial direction; the motor bracket which covers the one side in the axial direction of the stator and the rotor and has the center through hole through which the one-side shaft part extending toward the one side in the axial direction from the rotor penetrates; and the speed reducer which is connected to the one-side shaft part and outputs rotation with the speed reduced from the rotational speed of the shaft. The motor bracket has the one or more outer through holes penetrating in the axial direction, on the radially outer side of the center through hole. The motor housing or the motor bracket has the tubular surrounding portion which surrounds, over the entire circumference, the radially outer side of openings on the one side in the axial direction of all the outer through holes. The end surface on the one side in the axial direction of the surrounding portion contacts, over the entire circumference, with the case member of the speed reducer via the seal member so as to be sealed. Thus, as compared to Patent Document 2, the motor can be attached as a single body to the speed reducer, whereby ease of assembly and productivity of the electric vehicle drive device can be improved. In addition, inspection for the motor as a single body can be performed, whereby variation in the motor as a single body can be recognized. Thus, the quality of the motor can be improved. Since the quality of the motor is improved, reliability of the electric vehicle drive device can be ensured. In addition, as compared to Patent Document 1, since the outer through holes are provided to the motor bracket, material cost for the electric vehicle drive device can be reduced and the electric vehicle drive device can be reduced in weight. In addition, instead of attaching the motor and the speed reducer after sealing each of them, sealing is performed at the time of attachment. Thus, the sealing structure is simple, so that the electric vehicle drive device can be reduced in size.

### BRIEF DESCRIPTION OF THE DRAWINGS

[FIG. 1] FIG. 1 is a sectional view schematically showing an electric vehicle drive device according to embodiment 1.
[FIG. 2] FIG. 2 is a plan view schematically showing a motor bracket of the electric vehicle drive device according to embodiment 1.
[FIG. 3] FIG. 3 is a sectional view schematically showing another electric vehicle drive device according to embodiment 1.
[FIG. 4] FIG. 4 is a sectional view schematically showing an electric vehicle drive device according to embodiment 2.

### DESCRIPTION OF EMBODIMENTS

Hereinafter, an electric vehicle drive device according to embodiments of the present disclosure will be described with reference to the drawings. In the drawings, the same or corresponding members or parts are denoted by the same reference characters, to give description.

### Embodiment 1

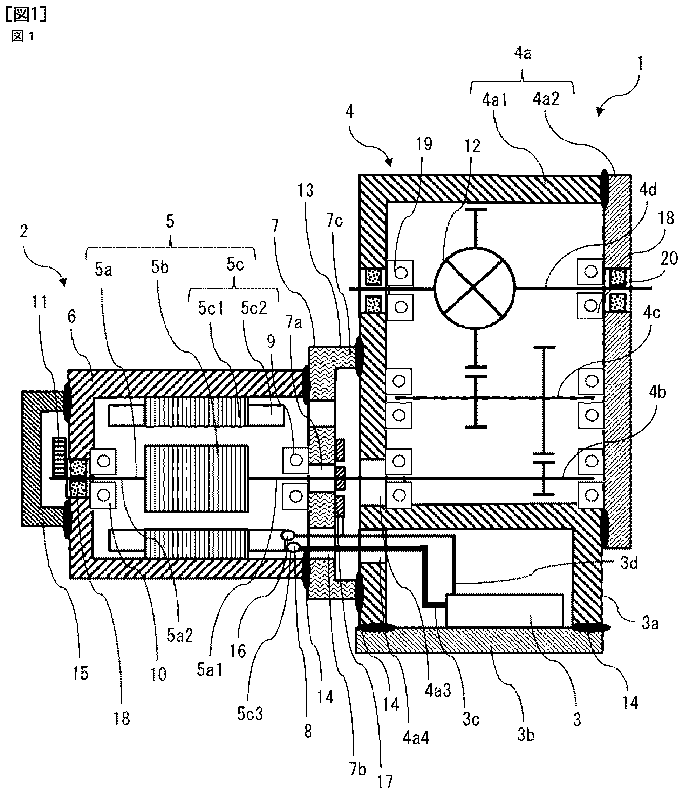

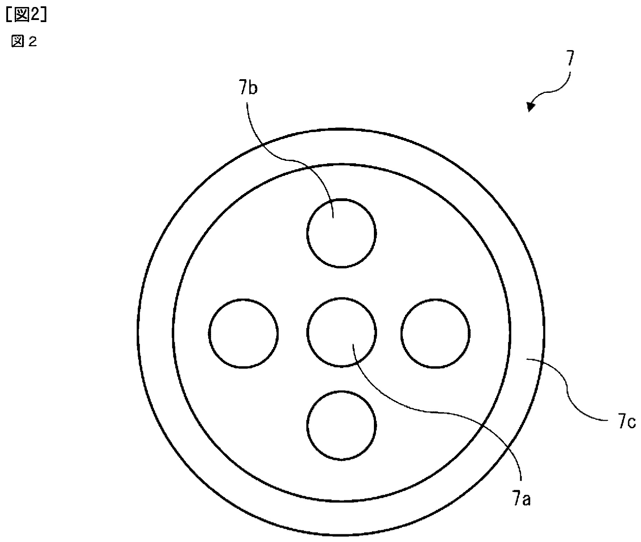

FIG. 1 is a sectional view schematically showing an electric vehicle drive device 1 according to embodiment 1, with the details of the internal configuration not shown. FIG. 2 is a plan view schematically showing a motor bracket 7 of the electric vehicle drive device 1, as seen from one side in the axial direction. The electric vehicle drive device 1 mounted to an electric vehicle is a device that transmits rotation of a motor 2 controlled by an inverter 3 connected to an external DC power supply, to a wheel shaft of the electric vehicle via a speed reducer 4.

### <Electric vehicle drive device 1>

As shown in FIG. 1, the electric vehicle drive device 1 includes: a motor body portion 5 including a shaft 5a, a rotor 5b which rotates integrally with the shaft 5a, and a stator 5c surrounding the rotor 5b from the radially outer side; a motor housing 6 to which the stator 5c is fixed on the inner side and which opens on the one side in the axial direction; the motor bracket 7 which covers the one side in the axial direction of the stator 5c and the rotor 5b and has a center through hole 7a through which a one-side shaft part 5a1 extending toward the one side in the axial direction from the rotor 5b penetrates; and the speed reducer 4 which is connected to the one-side shaft part 5a1 and outputs rotation with a speed reduced from the rotational speed of the shaft 5a. The motor body portion 5, the motor housing 6, and the motor bracket 7 form the motor 2. The one side in the axial direction is the right side where the speed reducer 4 is located with respect to the motor 2 on the drawing. The direction in which the motor housing 6 opens and the direction (the extending direction of the one-side shaft part 5a1) in which the shaft 5a of the rotor 5b fitted to the speed reducer 4 extends, are both toward the one side in the axial direction and thus coincide with each other.

The electric vehicle drive device 1 further includes the inverter 3 which performs conversion between DC power and AC power. The inverter 3 performs DC-AC conversion between a DC power supply (not shown) and a coil 5c2 for a plurality of phases. In the present embodiment, the inverter 3 is provided inside a case member 4a of the speed reducer 4. A part of the case member 4a where the inverter 3 is provided is sealed by an inverter lid 3b via a seal member 14. Since the inverter 3 is provided inside the case member 4a, the electric vehicle drive device 1 can be reduced in size.

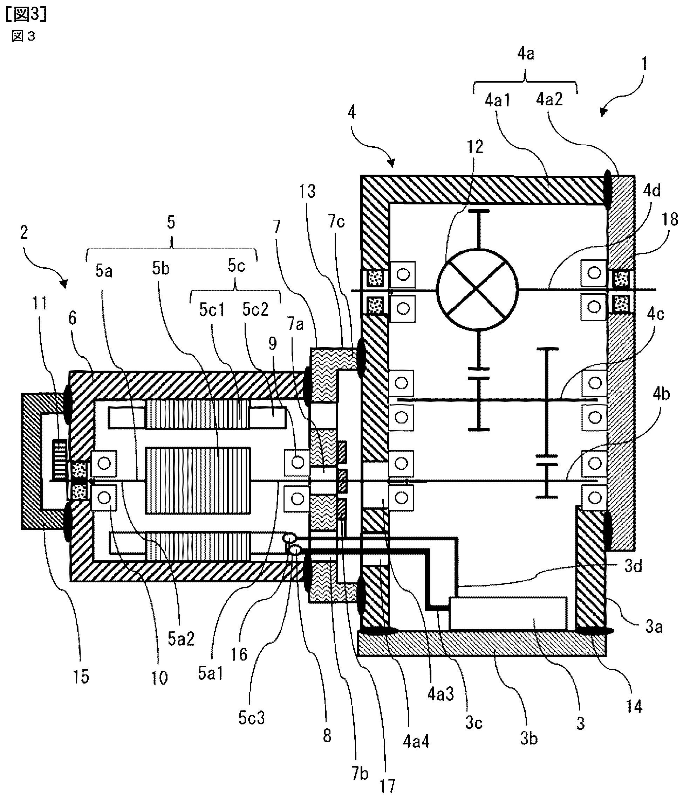

In the present embodiment, the inverter 3 is stored in an inverter case 3a, and the inverter case 3a is integrated with the case member 4a of the speed reducer 4. With this configuration, the number of components forming the case can be decreased. Since the number of components is decreased, the electric vehicle drive device 1 can be reduced in cost. The inverter 3 may be stored in the inverter case 3a made of metal, whereby noise leaking from the inverter 3 to the outside can be suppressed and noise coming into the inverter case 3a from the outside can be suppressed. If the case member 4a and the inverter case 3a are separate bodies, when the case member 4a and the inverter case 3a are attached to each other, placement variation due to attachment of the case member 4a and the inverter case 3a can occur between the case member 4a and the inverter case 3a, but since the inverter case 3a is integrated with the case member 4a of the speed reducer 4, placement variation can be suppressed. Without limitation to the configuration in which the inverter case 3a is integrated with the case member 4a, as shown in FIG. 3, the inverter 3 may be provided inside the case member 4a of the speed reducer 4 without providing the inverter case 3a. FIG. 3 is a sectional view schematically showing another electric vehicle drive device 1 according to embodiment 1. If the inverter case 3a is not provided, the periphery around the inverter 3 may be sealed by gel or the like so that the inverter 3 is protected from oil of the speed reducer 4 or the like.

As shown in FIG. 1, the stator 5c includes a tubular core 5c1, the coil 5c2 wound at the core 5c1, and two coil ends 5c3 (only one of them is shown in FIG. 1) which are ends of the coil 5c2 protruding from the core 5c1. A distal end of the coil end 5c3 located on the one side in the axial direction of the core 5c1 has a terminal 8 to which phase power is supplied from the inverter 3. The shaft 5a is rotatably supported by bearings 9 and 10. The bearing 9 supporting the one-side shaft part 5a1 extending toward the one side in the axial direction from the rotor 5b is provided adjacently to the center through hole 7a of the motor bracket 7. The bearing 10 supporting an other-side shaft part 5a2 extending toward another side in the axial direction from the rotor 5b is provided to the motor housing 6. A shaft grounding member 11 which grounds the shaft 5a is provided to the other-side shaft part 5a2 protruding toward the other side in the axial direction from the motor housing 6. The shaft grounding member 11 is a member provided as a measure for shaft voltage. The shaft grounding member 11 slides between the shaft 5a and the grounded motor housing 6 and provides electric conduction therebetween. The shaft grounding member 11 is covered by a ground cover 15. An oil seal 18 is provided at a through hole of the motor housing 6 through which the other-side shaft part 5a2 penetrates.

The speed reducer 4 includes, as a speed-reduction mechanism, a plurality of gears, gear shafts which are a plurality of shafts of the speed reducer 4 and which are integrated with the gears and parallel to the axial direction of the motor 2, and bearings supporting the gear shafts. The speed reducer 4 transmits rotation converted from rotation of the motor 2, to a wheel shaft. In the present embodiment, the speed reducer 4 includes three gear shafts 4b, 4c, and 4d. The shaft 5a and the gear shaft 4b are placed at the same axial position. The shaft 5a and the gear shaft 4b are connected by fitting, and motive force is transmitted therebetween (the manner of fitting is not shown). The gear shaft 4c is a shaft that rotates at a position different from the gear shaft 4b, and transmits a motive force with a speed reduced relative to the gear shaft 4b via gear engagement. The gear shaft 4d is a shaft that rotates at a position different from the gear shaft 4c, and transmits a motive force with a speed reduced relative to the gear shaft 4c via gear engagement.

A differential mechanism 12 is provided to the gear shaft 4d. The differential mechanism 12 imparts a function of branching an output shaft and absorbing a difference between respective rotation speeds, whereby the speed-reduction mechanism can absorb a difference between rotation speeds of left and right wheels during vehicle driving. The speed-reduction mechanism is stored in the case member 4a of the speed reducer 4. In the present embodiment, the case member 4a is composed of a storage portion 4a1 which opens on the one side in the axial direction, and a lid 4a2 which covers an opening of the storage portion 4a1. The lid 4a2 contacts with an end of the storage portion 4a1 formed substantially in parallel to the rotation planes of the gears. The gear shafts 4b, 4c, and 4d are provided between the storage portion 4a1 and the lid 4a2, and are rotatably supported by bearings 19 provided at the bottom of the storage portion 4a1 and bearings 20 provided at the lid 4a2. The oil seal 18 is provided at a through hole of the case member 4a through which the gear shaft 4d penetrates.

The motor housing 6, the motor bracket 7, and the case member 4a are manufactured by die casting using aluminum, for example. In the present embodiment, the motor housing 6 is formed in a bottomed tubular shape that opens on the one side in the axial direction. With this configuration, the motor housing 6 can be mass-produced at low cost by die casting using aluminum, or the like. In addition, the number of components can be decreased as compared to a configuration in which the other side in the axial direction of the motor housing 6 is divided. In addition, components of the motor body portion 5 can be inserted into the motor housing 6 through the opening of the motor housing 6, whereby the motor 2 can be easily assembled. Thus, ease of assembly and productivity of the electric vehicle drive device 1 can be improved.

### <Sealing structure>

A sealing structure, which is a major part of the present disclosure, will be described. As shown in FIG. 2, the motor bracket 7 has one or more outer through holes 7b penetrating in the axial direction, on the radially outer side of the center through hole 7a. In the present embodiment, the motor bracket 7 has four outer through holes 7b. However, the number of the outer through holes 7b is not limited to four. As shown in FIG. 1, the motor housing 6 or the motor bracket 7 has a tubular surrounding portion 13 which surrounds, over an entire circumference, the radially outer side of openings on the one side in the axial direction of all the outer through holes 7b, and an end surface on the one side in the axial direction of the surrounding portion 13 contacts, over an entire circumference, with the case member 4a of the speed reducer 4 via the seal member 14 so as to be sealed. In the present embodiment, the motor bracket 7 contacts with the case member 4a, and the motor bracket 7 is fixed to the case member 4a.

The seal member 14 is, for example, a liquid gasket, a metal gasket, or a rubber member such as an O ring, but without limitation thereto, the seal member 14 may be another member. In the configuration of the present disclosure, the seal member 14 is not limited at all.

With this configuration, as compared to Patent Document 2, the motor 2 can be attached as a single body to the speed reducer 4, whereby ease of assembly and productivity of the electric vehicle drive device 1 can be improved. In addition, inspection for the motor 2 as a single body can be performed, whereby variation in the motor 2 as a single body can be recognized. Thus, the quality of the motor 2 is improved and inspection cost for the motor 2 can be reduced. Since the quality of the motor 2 is improved, reliability of the electric vehicle drive device 1 can be ensured. In addition, as compared to Patent Document 1, since the outer through holes 7b are provided to the motor bracket 7, material cost for the electric vehicle drive device 1 can be reduced and the electric vehicle drive device 1 can be reduced in weight. In addition, instead of attaching the motor 2 and the speed reducer 4 after sealing each of them, the motor 2 and the speed reducer 4 are sealed at the time of attachment. Thus, the sealing structure is simple, so that the electric vehicle drive device 1 can be reduced in size.

The details of the sealing structure in the present embodiment will be described. The motor bracket 7 covers the opening on the one side in the axial direction of the motor housing 6. The motor bracket 7 has a tubular bracket one-side extending portion 7c extending toward the one side in the axial direction from a part where the center through hole 7a and the outer through holes 7b are provided, and the bracket one-side extending portion 7c is the surrounding portion 13. With this configuration, it is possible to form the motor housing 6 in a simple bottomed tubular shape. Since the shape of the motor housing 6 is simple, the motor housing 6 can be reduced in cost.

In the present embodiment, the motor bracket 7 and the opening on the one side in the axial direction of the motor housing 6 may be sealed therebetween by the seal member 14. The motor housing 6 is fixed to the motor bracket 7. With this configuration, the inside of the motor housing 6 can be easily protected from the outside. A case through hole 4a3 through which the one-side shaft part 5a1 or the gear shaft 4b which is the shaft of the speed reducer 4 connected to the one-side shaft part 5a1 penetrates is provided at a part of the case member 4a of the speed reducer 4 that is surrounded by the surrounding portion 13. With this configuration, the one-side shaft part 5a1 and the gear shaft 4b can be easily connected to each other through the case through hole 4a3. In addition, since the case through hole 4a3 is surrounded by the surrounding portion 13, the case through hole 4a3 can be sealed against the outside. In the present embodiment, since the inverter case 3a is integrated with the case member 4a of the speed reducer 4, accuracy of flatness at a part of the case member 4a with which the motor bracket 7 contacts is improved, so that sealing performance can be improved.

### <Wiring structure>

A wiring structure in the present disclosure will be described. An inverter through hole 4a4 penetrating in the axial direction is provided at a part of the case member 4a of the speed reducer 4 that is surrounded by the surrounding portion 13. The inverter 3 and the motor body portion 5 are connected to each other through the outer through hole 7b and the inverter through hole 4a4. The motor body portion 5 has a plurality of parts connected to the inverter 3. Therefore, various connection lines such as a phase power line 3c and a sensor signal line 3d are provided between the motor body portion 5 and the inverter 3. With this configuration, various connection lines can be easily connected to the motor body portion 5 and the inverter 3 through the outer through hole 7b and the inverter through hole 4a4. In addition, since the end surface of the surrounding portion 13 contacts with the case member 4a of the speed reducer 4 via the seal member 14 and the inverter through hole 4a4 is surrounded by the surrounding portion 13, the inverter through hole 4a4 can be sealed without providing an additional sealing structure. Since an additional sealing structure need not be provided, productivity of the electric vehicle drive device 1 can be improved.

In the present embodiment, the distal end of the coil end 5c3 located on the one side in the axial direction of the core 5c1 has the terminal 8 to which phase power is supplied from the inverter 3, and the terminal 8 and the inverter 3 are connected to each other through the outer through hole 7b and the inverter through hole 4a4. The inverter 3 has the phase power line 3c through which phase power is supplied from the inverter 3 to the terminal 8. The phase power line 3c penetrates through the outer through hole 7b and the inverter through hole 4a4. With this configuration, the terminal 8 and the inverter 3 can be connected to each other by the phase power line 3c through the outer through hole 7b and the inverter through hole 4a4, whereby the terminal 8 and the inverter 3 can be easily connected to each other. In addition, the length of the phase power line 3c which is a line connecting the terminal 8 and the inverter 3 can be shortened. Since the length of the phase power line 3c is shortened, the influence of noise can be reduced.

In the present embodiment, the motor body portion 5 has a temperature sensor 16. The temperature sensor 16 measures a temperature of the coil 5c2. The temperature sensor 16 is a thermistor, for example. The inverter 3 controls operation of the motor 2, using temperature information measured by the temperature sensor 16. The temperature sensor 16 is attached to the coil end 5c3 located on the one side in the axial direction of the core 5c1, and the temperature sensor 16 and the inverter 3 are connected to each other through the outer through hole 7b and the inverter through hole 4a4. The inverter 3 has the sensor signal line 3d connecting the inverter 3 and the temperature sensor 16. The sensor signal line 3d penetrates through the outer through hole 7b and the inverter through hole 4a4. With this configuration, the temperature sensor 16 and the inverter 3 can be connected to each other by the sensor signal line 3d through the outer through hole 7b and the inverter through hole 4a4, whereby the temperature sensor 16 and the inverter 3 can be easily connected to each other without being influenced by another member. In addition, the length of the sensor signal line 3d which is a line connecting the temperature sensor 16 and the inverter 3 can be shortened. Since the length of the sensor signal line 3d is shortened, the influence of noise can be reduced.

In the present embodiment, the motor body portion 5 has a rotation sensor 17. The rotation sensor 17 detects rotation (a rotational angle and a rotational speed) of the motor body portion 5. The inverter 3 controls operation of the motor 2, using information about rotation of the motor body portion 5 measured by the rotation sensor 17. The rotation sensor 17 is a resolver, for example. The rotation sensor 17 is not limited to a resolver, and may be a magnetic sensor using a magnetoelectric conversion element such as a Hall element. The rotation sensor 17 is attached to a part of the motor bracket 7 on the inner side of the surrounding portion 13. The rotation sensor 17 and the inverter 3 are connected to each other through the inverter through hole 4a4. The inverter 3 has the sensor signal line 3d connecting the inverter 3 and the rotation sensor 17. The sensor signal line 3d penetrates through the inverter through hole 4a4. With this configuration, the rotation sensor 17 and the inverter 3 can be connected to each other by the sensor signal line 3d through the inverter through hole 4a4, whereby the rotation sensor 17 and the inverter 3 can be easily connected to each other without being influenced by another member. In addition, the length of the sensor signal line 3d which is a line connecting the rotation sensor 17 and the inverter 3 can be shortened. Since the length of the sensor signal line 3d is shortened, the influence of noise can be reduced.

In the present embodiment, the rotation sensor 17 is provided on the one side in the axial direction of the motor bracket 7, and the motor bracket 7 is made of metal. The material of the motor bracket 7 is aluminum, for example. The motor bracket 7 is grounded. With this configuration, since the motor bracket 7 which is conductive is interposed between the stator 5c and the rotation sensor 17, a leakage magnetic flux generated from the stator 5c can be inhibited from entering the rotation sensor 17 and becoming noise to cause an adverse influence. In the present embodiment, the example in which the rotation sensor 17 is provided on the one side in the axial direction of the motor bracket 7 has been shown. However, placement of the rotation sensor 17 is not limited thereto, and the rotation sensor 17 may be provided on the other side in the axial direction of the motor bracket 7. If the rotation sensor 17 is provided on the other side in the axial direction of the motor bracket 7, the rotation sensor 17 and the inverter 3 are connected to each other by the sensor signal line 3d through the outer through hole 7b and the inverter through hole 4a4. If the rotation sensor 17 is provided on the other side in the axial direction of the motor bracket 7, it is desirable that the periphery of the rotation sensor 17 is surrounded by a magnetic shield.

As described above, the electric vehicle drive device 1 according to embodiment 1 includes: the motor body portion 5 including the shaft 5a, the rotor 5b, and the stator 5c; the motor housing 6 to which the stator 5c is fixed on the inner side and which opens on the one side in the axial direction; the motor bracket 7 which covers the one side in the axial direction of the stator 5c and the rotor 5b and has the center through hole 7a through which the one-side shaft part 5a1 extending toward the one side in the axial direction from the rotor 5b penetrates; and the speed reducer 4 which is connected to the one-side shaft part 5a1 and outputs rotation with a speed reduced from the rotational speed of the shaft 5a. The motor bracket 7 has one or more outer through holes 7b penetrating in the axial direction, on the radially outer side of the center through hole 7a. The motor housing 6 or the motor bracket 7 has the tubular surrounding portion 13 which surrounds, over an entire circumference, the radially outer side of the openings on the one side in the axial direction of all the outer through holes 7b, and the end surface on the one side in the axial direction of the surrounding portion 13 contacts, over an entire circumference, with the case member 4a of the speed reducer 4 via the seal member 14 so as to be sealed. Thus, as compared to Patent Document 2, the motor 2 can be attached as a single body to the speed reducer 4, whereby ease of assembly and productivity of the electric vehicle drive device 1 can be improved. In addition, inspection for the motor 2 as a single body can be performed, whereby variation in the motor 2 as a single body can be recognized. Thus, the quality of the motor 2 can be improved. Since the quality of the motor 2 is improved, reliability of the electric vehicle drive device 1 can be ensured.

In addition, as compared to Patent Document 1, since the outer through holes 7b are provided to the motor bracket 7, material cost for the electric vehicle drive device 1 can be reduced and the electric vehicle drive device 1 can be reduced in weight. In addition, instead of attaching the motor 2 and the speed reducer 4 after sealing each of them, sealing is performed at the time of attachment. Thus, the sealing structure is simple, so that the electric vehicle drive device 1 can be reduced in size.

The motor bracket 7 may cover the opening on the one side in the axial direction of the motor housing 6, and the motor bracket 7 may have the tubular bracket one-side extending portion 7c extending toward the one side in the axial direction from a part where the center through hole 7a and the outer through holes 7b are provided. The bracket one-side extending portion 7c may be the surrounding portion 13. Thus, it is possible to form the motor housing 6 in a simple bottomed tubular shape. Since the shape of the motor housing 6 is simple, the motor housing 6 can be reduced in cost. The motor bracket 7 and the opening on the one side in the axial direction of the motor housing 6 may be sealed therebetween by the seal member. Thus, the inside of the motor housing 6 can be easily protected from the outside.

The case through hole 4a3 through which the one-side shaft part 5a1 or the gear shaft 4b which is the shaft of the speed reducer 4 connected to the one-side shaft part 5a1 penetrates may be provided at a part of the case member 4a of the speed reducer 4 that is surrounded by the surrounding portion 13. Thus, the one-side shaft part 5a1 and the gear shaft 4b can be easily connected to each other through the case through hole 4a3. In addition, since the case through hole 4a3 is surrounded by the surrounding portion 13, the case through hole 4a3 can be sealed against the outside.

The electric vehicle drive device 1 may further include the inverter 3 which performs conversion between DC power and AC power. The inverter 3 may be provided inside the case member 4a of the speed reducer 4. The inverter through hole 4a4 penetrating in the axial direction may be provided at a part of the case member 4a of the speed reducer 4 that is surrounded by the surrounding portion 13. The inverter 3 and the motor body portion 5 may be connected to each other through the outer through hole 7b and the inverter through hole 4a4. Thus, various connection lines such as the phase power line 3c and the sensor signal line 3d can be easily connected to each other through the outer through hole 7b and the inverter through hole 4a4. In addition, since the end surface of the surrounding portion 13 contacts with the case member 4a of the speed reducer 4 via the seal member 14 and the inverter through hole 4a4 is surrounded by the surrounding portion 13, the inverter through hole 4a4 can be sealed without providing an additional sealing structure. Since an additional sealing structure need not be provided, productivity of the electric vehicle drive device 1 can be improved.

The inverter 3 may be stored in the inverter case 3a, and the inverter case 3a may be integrated with the case member 4a of the speed reducer 4. Thus, the number of components forming the case can be decreased. Since the number of components is decreased, the electric vehicle drive device 1 can be reduced in cost. If the case member 4a and the inverter case 3a are separate bodies, when the case member 4a and the inverter case 3a are attached to each other, placement variation due to attachment of the case member 4a and the inverter case 3a can occur between the case member 4a and the inverter case 3a, but since the inverter case 3a is integrated with the case member 4a of the speed reducer 4, placement variation can be suppressed.

The stator 5c may include the tubular core 5c1, the coil 5c2 wound at the core 5c1, and the two coil ends 5c3 which are ends of the coil 5c2 protruding from the core 5c1. The distal end of the coil end 5c3 located on the one side in the axial direction of the core 5c1 may have the terminal 8 to which phase power is supplied from the inverter 3. The terminal 8 and the inverter 3 may be connected to each other through the outer through hole 7b and the inverter through hole 4a4. Thus, the terminal 8 and the inverter 3 can be connected to each other by the phase power line 3c through the outer through hole 7b and the inverter through hole 4a4, whereby the terminal 8 and the inverter 3 can be easily connected to each other. In addition, the length of the phase power line 3c which is a line connecting the terminal 8 and the inverter 3 can be shortened.

The temperature sensor 16 may be attached to the coil end 5c3 located on the one side in the axial direction of the core 5c1, and the temperature sensor 16 and the 3 inverter may be connected to each other through the outer through hole 7b and the inverter through hole 4a4. Thus, the temperature sensor 16 and the inverter 3 can be connected to each other by the sensor signal line 3d through the outer through hole 7b and the inverter through hole 4a4, whereby the temperature sensor 16 and the inverter 3 can be easily connected to each other without being influenced by another member. In addition, the length of the sensor signal line 3d which is a line connecting the temperature sensor 16 and the inverter 3 can be shortened.

The rotation sensor 17 which detects rotation of the motor body portion 5 may be attached to a part of the motor bracket 7 on the inner side of the surrounding portion 13, and the rotation sensor 17 and the inverter 3 may be connected to each other through the inverter through hole 4a4. Thus, the rotation sensor 17 and the inverter 3 can be connected to each other by the sensor signal line 3d through the inverter through hole 4a4, whereby the rotation sensor 17 and the inverter 3 can be easily connected to each other without being influenced by another member. In addition, the length of the sensor signal line 3d which is a line connecting the rotation sensor 17 and the inverter 3 can be shortened.

The rotation sensor may be provided on the one side in the axial direction of the motor bracket 7, and the motor bracket 7 may be made of metal. Thus, since the motor bracket 7 which is conductive is interposed between the stator 5c and the rotation sensor 17, a leakage magnetic flux generated from the stator 5c can be inhibited from entering the rotation sensor 17 and becoming noise to cause an adverse influence. The motor housing 6 may be formed in a bottomed tubular shape that opens on the one side in the axial direction. Thus, the motor housing 6 can be mass-produced at low cost by die casting using aluminum, or the like. In addition, components of the motor body portion 5 can be inserted into the motor housing 6 through the opening, whereby the motor 2 can be easily assembled. Thus, ease of assembly and productivity of the electric vehicle drive device 1 can be improved.

### Embodiment 2

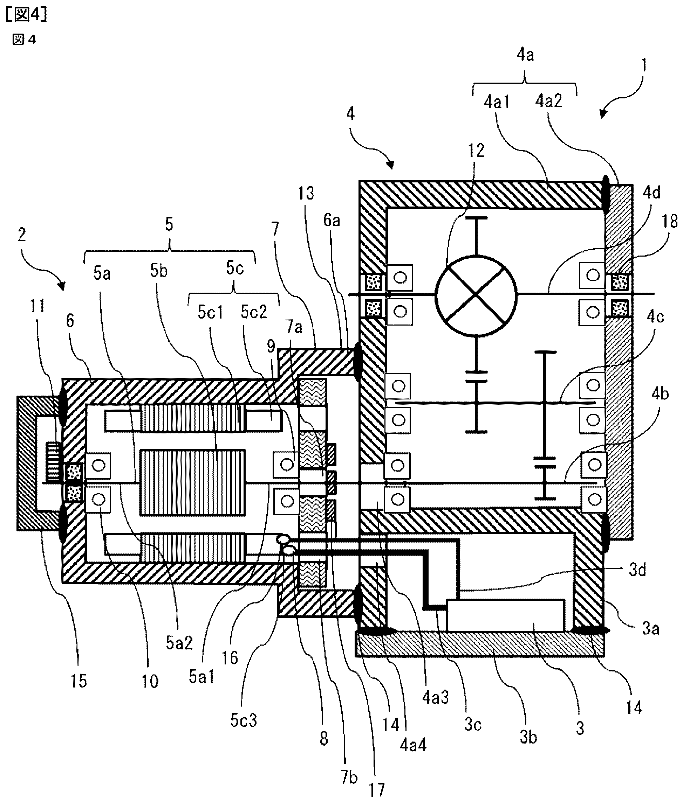

An electric vehicle drive device 1 according to embodiment 2 will be described. FIG. 4 is a sectional view schematically showing the electric vehicle drive device 1 according to embodiment 2, with the details of the internal configuration not shown. In the electric vehicle drive device 1 according to embodiment 2, the motor housing 6 contacts with the case member 4a via the seal member 14, and the motor housing 6 is fixed to the case member 4a.

In the present embodiment, the motor housing 6 has a tubular housing one-side extending portion 6a extending toward the one side in the axial direction, on the radially outer side of the motor bracket 7. The motor bracket 7 is provided on the inner side of the housing one-side extending portion 6a, and a part of the housing one-side extending portion 6a on the one side in the axial direction relative to the motor bracket 7 is the surrounding portion 13.

With this configuration, it becomes unnecessary to provide a seal member between the motor bracket 7 and the motor housing 6, so that ease of assembly and productivity of the electric vehicle drive device 1 can be improved. In addition, the electric vehicle drive device 1 can be reduced in cost.

In the drawings, the motor 2 described in the present disclosure is shown as a configuration of an inner-rotor and radial-gap type which is often used. The configuration of the motor 2 is not limited thereto, and may be another configuration, e.g., an outer-rotor and radial-gap type, an axial-gap type, or another motor type. The configuration of the present disclosure is applicable also to a motor having another configuration, and is not intended to limit the configuration of the motor.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

- 1: electric vehicle drive device
- 2: motor
- 3: inverter
- 3a: inverter case
- 3b: inverter lid
- 3c: phase power line
- 3d: sensor signal line
- 4: speed reducer
- 4a: case member
- 4a1: storage portion
- 4a2: lid
- 4a3: case through hole
- 4a4: inverter through hole
- 4b, 4c, 4d: gear shaft
- 5: motor body portion
- 5a: shaft
- 5a1: one-side shaft part
- 5a2: other-side shaft part
- 5b: rotor
- 5c: stator
- 5c1: core
- 5c2: coil
- 5c3: coil end
- 6: motor housing
- 6a: housing one-side extending portion
- 7: motor bracket
- 7a: center through hole
- 7b: outer through hole
- 7c: bracket one-side extending portion
- 8: terminal
- 9: bearing
- 10: bearing
- 11: shaft grounding member
- 12: differential mechanism
- 13: surrounding portion
- 14: seal member
- 15: ground cover
- 16: temperature sensor
- 17: rotation sensor
- 18: oil seal
- 19, 20: bearing

## Claims

1. An electric vehicle drive device comprising:
a motor body portion including a shaft, a rotor which rotates integrally with the shaft, and a stator surrounding the rotor from a radially outer side;
a motor housing to which the stator is fixed on an inner side and which opens on one side in an axial direction;
a motor bracket which covers the one side in the axial direction of the stator and the rotor and has a center through hole through which a one-side shaft part extending toward the one side in the axial direction from the rotor penetrates; and
a speed reducer which is connected to the one-side shaft part and outputs rotation with a speed reduced from a rotational speed of the shaft, wherein
the motor bracket has one or more outer through holes penetrating in the axial direction, on a radially outer side of the center through hole,
the motor housing or the motor bracket has a tubular surrounding portion which surrounds, over an entire circumference, a radially outer side of openings on the one side in the axial direction of all the outer through holes, and
an end surface on the one side in the axial direction of the surrounding portion contacts, over an entire circumference, with a case member of the speed reducer via a seal member so as to be sealed.

2. The electric vehicle drive device according to claim 1, wherein
the motor housing has a tubular housing one-side extending portion extending toward the one side in the axial direction, on a radially outer side of the motor bracket,
the motor bracket is provided on an inner side of the housing one-side extending portion, and
a part of the housing one-side extending portion on the one side in the axial direction relative to the motor bracket is the surrounding portion.

3. The electric vehicle drive device according to claim 1, wherein
the motor bracket covers an opening on the one side in the axial direction of the motor housing,
the motor bracket has a tubular bracket one-side extending portion extending toward the one side in the axial direction from a part where the center through hole and the outer through holes are provided, and
the bracket one-side extending portion is the surrounding portion.

4. The electric vehicle drive device according to claim 3, wherein
the motor bracket and the opening on the one side in the axial direction of the motor housing are sealed therebetween by a seal member.

5. The electric vehicle drive device according to any one of claims 1 to 4, wherein
a case through hole through which the one-side shaft part or a shaft of the speed reducer connected to the one-side shaft part penetrates is provided at a part of the case member of the speed reducer that is surrounded by the surrounding portion.

6. The electric vehicle drive device according to any one of claims 1 to 5, further comprising an inverter which performs conversion between DC power and AC power, wherein
the inverter is provided inside the case member of the speed reducer,
an inverter through hole penetrating in the axial direction is provided at a part of the case member of the speed reducer that is surrounded by the surrounding portion, and
the inverter and the motor body portion are connected to each other through the outer through hole and the inverter through hole.

7. The electric vehicle drive device according to claim 6, wherein
the inverter is stored in an inverter case, and
the inverter case is integrated with the case member of the speed reducer.

8. The electric vehicle drive device according to claim 6 or 7, wherein
the stator includes a tubular core, a coil wound at the core, and two coil ends which are ends of the coil protruding from the core,
a distal end of the coil end located on the one side in the axial direction of the core has a terminal to which phase power is supplied from the inverter, and
the terminal and the inverter are connected to each other through the outer through hole and the inverter through hole.

9. The electric vehicle drive device according to claim 6 or 7, wherein
the stator includes a tubular core, a coil wound at the core, and two coil ends which are ends of the coil protruding from the core,
a temperature sensor is attached to the coil end located on the one side in the axial direction of the core, and
the temperature sensor and the inverter are connected to each other through the outer through hole and the inverter through hole.

10. The electric vehicle drive device according to claim 6 or 7, wherein
a rotation sensor which detects rotation of the motor body portion is attached to a part of the motor bracket on an inner side of the surrounding portion, and
the rotation sensor and the inverter are connected to each other through the inverter through hole.

11. The electric vehicle drive device according to claim 10, wherein
the rotation sensor is provided on the one side in the axial direction of the motor bracket, and
the motor bracket is made of metal.

12. The electric vehicle drive device according to any one of claims 1 to 11, wherein
the motor housing is formed in a bottomed tubular shape that opens on the one side in the axial direction.
